# EUROPÄISCHE PATENTANMELDUNG

(11) **EP 4 799 957 A2**
(43) Veröffentlichungstag der Anmeldung: **02.09.2026**
(21) Anmeldenummer: 26192425.2
(22) Anmeldetag: 06.04.2018
(51) Int. Cl.: B65G 1/137

(54) **LAGERSYSTEM MIT EINER KOMMISSIONIERVORRICHTUNG MIT RESTZEITANZEIGE**

(30) Priorität: 20.12.2017 DE 102017223437
(62) Dokumentnummer(n) der früheren Anmeldung(en) nach Art. 76 EPÜ: 18720097.7 / 3 728 081
(71) Anmelder: Kardex Produktion Deutschland GmbH, 76756 Bellheim (DE)
(72) Erfinder: Jungbluth, Volker, 44267 Dortmund (DE); Harder, Emmanuel, 68789 St. Leon-Rot (DE); Kraus, Pavel, 702 00 Ostrava 1 (CZ); Tejnicky, Bohumil, 733 01 Karviná - Fry tát (CZ)

(57) **Zusammenfassung**

Die Erfindung betrifft ein Lagersystem mit wenigstens einer Kommissioniervorrichtung (1), insbesondere einen Lagerlift (3), mit wenigstens einer Entnahmestelle (7) für Lagergut (11) und/oder Lagergutträger (13), sowie mit wenigstens einer Restzeitberechnungsvorrichtung (17), mit der die Restzeit bis zum Eintreffen eines in der Kommissioniervorrichtung (1) transportierten Lagerguts (11) und/oder Lagergutträgers (13) an der wenigstens einen Entnahmestelle (7) berechenbar ist, und wobei die Kommissioniervorrichtung (1) wenigstens eine Positionsbestimmungseinrichtung (35) zur Bestimmung der Position eines Lagerguts (11) und/oder Lagergutträgers (13) innerhalb der Kommissioniervorrichtung (1) aufweist, die mit der wenigstens einen Restzeitberechnungsvorrichtung (17) datenübertragend verbunden ist. Um die Effizienz des Betriebs eines Lagersystems mit wenigstens einer Kommissioniervorrichtung (1) zu erhöhen, ist erfindungsgemäß vorgesehen, dass die Kommissioniervorrichtung (1) wenigstens eine Anzeigeeinrichtung (25) aufweist, wobei die Kommissioniervorrichtung derart eingerichtet ist, dass auf der Anzeigeeinrichtung (25) eine die Restzeit repräsentierende Abbildung (27) anzeigbar ist.

## Beschreibung

Die Erfindung betrifft ein Lagersystem mit wenigstens einer Kommissioniervorrichtung, insbesondere einen Lagerlift, mit wenigstens einer Entnahmestelle für Lagergut und/oder Lagergutträger.

Kommissioniervorrichtungen, insbesondere Lagerlifte, sind bekannt. Typische Beispiele für Kommissioniervorrichtungen sind Paternosterlagerlifte oder Umlauflager. Solche Kommissioniervorrichtungen weisen Entnahmestellen auf, welche beispielsweise durch eine Bedienöffnung zugänglich sein können. Lagergut bzw. Lagergutträger, welche in der Kommissioniervorrichtung eingelagert sind, oder durch diese transportiert werden, können automatisiert zu der Entnahmestelle transportiert werden. Dort können sie von Bedienpersonen, sogenannten Pickern, entnommen werden. Häufig weist eine Kommissioniervorrichtung mehrere Entnahmestellen auf. Auch kann es möglich sein, dass mehrere Kommissioniervorrichtungen zusammen ein Lagersystem bilden, wobei jede Kommissioniervorrichtung wenigstens eine Entnahmestelle aufweist.

Aus der EP 2 639 186 A2 sind ein Lager und ein Verfahren für dessen Betrieb bekannt. Das Lager weist ein Transportwegeermittlungsmodul zur Ermittlung von Transportwegen zwischen den Lagerplätzen und der Palettierungsstation sowie ein Kommissionierungsdauerberechnungsmodul zum Berechnen der kürzestmöglichen Kommissionierungsdauer in Abhängigkeit der ermittelten Lagerbestände und Transportwege auf. Aus der US 2012/271742 A1 ist ein Verfahren zum Betrieb eines Lagers bekannt, wobei beim Betrieb des Lagers ein separates Eingabegerät mit einem konfigurierbaren Display verwendet wird. Die JP H07 102817 A beschreibt ein System anhand eines automatisierten Parkhauses. In dem Parkhaus können Fahrzeuge mittels eines Lifts automatisiert übereinander in Fächern abgestellt werden. An mehreren Stellen entlang eines Transportweges befinden sich Sensoren zur Bestimmung der Position eines Fahrzeugs während des Transportes. Anhand gespeicherter Transportzeiten zwischen den einzelnen Sensoren kann die Zeit bis zum Eintreffen des Fahrzeugs an einer Ausgabestelle berechnet werden.

Es ist die Aufgabe der Erfindung, die Arbeitsabläufe beim Kommissionieren effizienter zu gestalten.

Die erfindungsgemäße Aufgabe ist für das eingangs genannte Lagersystem mit wenigstens einer Kommissioniervorrichtung dadurch gelöst, dass die Kommissioniervorrichtung mit wenigstens einer Restzeitberechnungsvorrichtung verbunden ist, mit der die Restzeit bis zum Eintreffen eines in der Kommissioniervorrichtung transportierten Lagerguts und/oder Lagergutträgers an der wenigstens einen Entnahmestelle berechenbar ist, und wobei die Kommissioniervorrichtung wenigstens eine Positionsbestimmungseinrichtung zur Bestimmung der Position eines Lagerguts und/oder Lagergutträgers innerhalb der Kommissioniervorrichtung aufweist, die mit der wenigstens einen Restzeitberechnungsvorrichtung datenübertragend verbunden ist, und wobei die wenigstens eine Kommissioniervorrichtung wenigstens eine Anzeigeeinrichtung aufweist, wobei die Kommissioniervorrichtung derart eingerichtet ist, dass auf der Anzeigeeinrichtung eine die Restzeit repräsentierende Abbildung anzeigbar ist.

Erfindungsgemäß ist zudem ein Verfahren, zum Anzeigen einer Restzeit bis zum Eintreffen eines in einer Kommissioniervorrichtung eines Lagersystems transportierten Lagerguts und/oder Lagergutträgers an wenigstens einer Entnahmestelle der wenigstens eine Kommissioniervorrichtung vorgesehen, wobei die Restzeit berechnet und durch wenigstens eine die Restzeit repräsentierende Abbildung von außerhalb der Kommissioniervorrichtung einsehbar angezeigt wird, wobei zur Berechnung der Restzeit die Position wenigstens eines transportierten Lagerguts und/oder Lagergutträgers zu wenigstens einem Zeitpunkt bestimmt wird. Das erfindungsgemäße Verfahren löst ebenfalls die erfindungsgemäße Aufgabe.

Durch die Erfindung ist es möglich, die Effizienz des Betriebs einer Kommissioniervorrichtung zu steigern. Durch die Restzeitanzeige kann eine Bedienperson darüber informiert werden, wie lange es bis zur Ankunft von Lagergut an der Entnahmestelle dauert. Dadurch ist die Tätigkeit der Bedienperson besser planbar. Dabei können andere Tätigkeiten, insbesondere in der Nähe der Kommissioniervorrichtung, unter Berücksichtigung der Restzeit geplant werden. Die Bedienperson kann dann zum Ablauf der Restzeit im Bereich der Entnahmestelle anwesend sein, sodass das dort eintreffende Lagergut bzw. der Lagergutträger zeitnah entnommen werden können. Auf diese Weise lassen sich Totzeiten im Betrieb von Kommissioniervorrichtungen vermeiden. Durch die erfindungsgemäße Lösung wird die Bedienperson bei der Ausführung der Kommissionierung unterstützt. Die Ausführung der Kommissionierung ist dabei ursächlich mit an der wenigstens einen Anzeigeeinrichtung angezeigten Abbildung verknüpft.

Die erfindungsgemäße Lösung kann durch verschiedene, jeweils für sich vorteilhafte und beliebig miteinander kombinierbare Ausgestaltungen weiter verbessert werden. Auf diese Ausgestaltungsformen und die mit ihnen verbundenen Vorteile ist im Folgenden eingegangen. Dabei ist das erfindungsgemäße Verfahren mit den beschriebenen Ausgestaltungen der erfindungsgemäßen Kommissioniervorrichtung durchführbar. Mit anderen Worten gelten die in Bezug auf die erfindungsgemäße Kommissioniervorrichtung beschriebenen Vorteile auch für den Betrieb einer Kommissioniervorrichtung mittels des erfindungsgemäßen Verfahrens. Ebenso lassen sich die mit Bezug auf das Verfahren beschriebenen Vorteile auf die erfindungsgemäße Kommissioniervorrichtung übertragen.

Die die Restzeit repräsentierende Abbildung ist bevorzugt so gestaltet, dass diese intuitiv von einer Bedienperson erkannt und verstanden werden kann.

Gemäß einer ersten vorteilhaften Ausgestaltung kann die wenigstens eine Anzeigeeinrichtung einen Bildschirm aufweisen. Dadurch kann die Restzeit auf verschiedenste Arten dargestellt werden. Ebenso kann der Bildschirm auch zur Darstellung von weiteren Informationen benutzt werden. Als Bildschirm kann ein Bildschirmtyp einer bekannten Art verwendet werden. Lediglich beispielhaft seien hier die Bildschirmtypen Flüssigkristallanzeige (LCD), Dünnschichttransistoranzeige (TFT), organische Leuchtdiodenanzeige (OLED) und Kathodenstrahlröhre (CRT) genannt.

Darüber hinaus ist es möglich, dass die wenigstens eine Anzeigeeinrichtung ein System, bestehend aus Projektor und Projektionsfläche, aufweist. Als Projektionsfläche kann dabei eine Außenwand der Kommissioniervorrichtung verwendet werden.

Eine weitere vorteilhafte Ausgestaltung kann dadurch erhalten werden, dass die wenigstens eine Anzeigeeinrichtung eine Leuchtdiodenmatrix (LED-Array) aufweist. Wie bei dem vorbeschriebenen Bildschirm, kann die Leuchtdiodenmatrix auf vielfältige Weise angesteuert werden, um die Restzeit darzustellen.

Sowohl bei einer Darstellung mittels eines Bildschirms als auch bei einer Darstellung mittels einer Leuchtdiodenmatrix kann die Restzeit beispielsweise durch eine Balkenanzeige dargestellt werden. Dabei kann die Anzahl der Balken proportional zur Restzeit sein, sodass eine Abnahme der Anzahl von Balken den Ablauf der Restzeit anzeigt. Auch sind andere, auf dem gleichen Prinzip beruhende, Darstellungsformen möglich. Beispielsweise kann die Restzeit durch ein Tortendiagramm dargestellt werden, dessen Abschnitte mit Ablauf der Restzeit weniger werden.

Für die zuvor beschriebene grafische Darstellung in Form von Balken oder Tortendiagrammen können natürlich auch andere Anzeigetechniken verwendet werden. Beispielsweise können auch Leuchtflächen in Form von Balken verwendet werden. Ebenfalls ist es möglich, dass die wenigstens eine Anzeigeeinrichtung eine Mehrzahl von Leuchtmitteln aufweist, die so ansteuerbar sind, dass die Anzahl der leuchtenden Leuchtmittel proportional zur Restzeit ist.

Eine weitere intuitive Darstellung der Restzeit kann dadurch erhalten werden, dass die wenigstens eine Anzeigeeinrichtung wenigstens ein Leuchtelement aufweist, dessen Lichtfarbe einstellbar ist. So kann die Farbe des Leuchtelements beispielsweise mit Ablauf der Restzeit verändert werden. Dabei kann eine bestimmte Farbe dem unmittelbaren Eintreffen von Lagergut an der Entnahmestelle zugeordnet sein. Mit Ablauf der Restzeit wird dann der Anteil dieser Farbe kontinuierlich erhöht.

Die wenigstens eine Anzeigeeinrichtung kann wenigstens ein Leuchtelement aufweisen, dessen Helligkeit einstellbar ist. So kann die Helligkeit bei ablaufender Restzeit beispielsweise zunehmen, sodass maximale Helligkeit die Ankunft von Lagergut an der Entnahmestelle signalisiert. Alternativ dazu kann die Helligkeit bei ablaufender Restzeit abnehmen, sodass minimale Helligkeit des Leuchtelements das Eintreffen von Lagergut an der Entnahmestelle anzeigt. Die Änderung der Helligkeit des Leuchtelements erfolgt bevorzugt kontinuierlich. Jedoch ist es auch möglich, die Helligkeit gestuft zu regeln.

Gemäß einer weiteren vorteilhaften Ausgestaltung, welche die intuitiv erfassbare Darstellung der Restzeit ermöglicht, kann die wenigstens eine Anzeigeeinrichtung wenigstens ein bewegliches mechanisches Element aufweisen. Ein solches Element kann beispielsweise ein Zeiger sein.

Selbstverständlich kann ein mechanisches Element wie der beispielhaft genannte Zeiger auch lediglich virtuell dargestellt sein. Insbesondere kann wenigstens eine der oben aufgeführten Anzeigeeinrichtungen, insbesondere der Bildschirm, zur Darstellung eines mechanischen Elements verwendet werden.

Die wenigstens eine Anzeigeeinrichtung kann wenigstens eine Ziffernanzeige aufweisen. Dadurch kann die Restzeit beispielsweise direkt in Form einer Zeitangabe dargestellt werden. Insbesondere kann die Restzeit in Form der verbleibenden Sekunden bis zum Eintreffen des Lagerguts an der Entnahmestelle angezeigt werden.

Die wenigstens eine Restzeitberechnungsvorrichtung kann in die Kommissioniervorrichtung integriert sein. Insbesondere kann die Restzeitberechnungsvorrichtung Teil einer Steuereinrichtung der Kommissioniervorrichtung sein. Dabei kann die Restzeitberechnungsvorrichtung als Software und/oder Hardware in der Steuereinrichtung implementiert sein. Durch die Integrierung der Restzeitberechnungsvorrichtung in die Kommissioniervorrichtung kann eine kompakte Kommissioniervorrichtung erhalten werden

Alternativ oder zusätzlich zur Integration der Restzeitberechnungsvorrichtung in die Kommissioniervorrichtung kann die wenigstens eine Restzeitberechnungsvorrichtung Teil einer außerhalb der Kommissioniervorrichtung angeordneten Steuereinrichtung sein. Eine solche außerhalb der Kommissioniervorrichtung angeordnete Steuereinrichtung kann beispielsweise ein Computer, insbesondere ein Personal Computer (PC), sein.

Um die Berechnung der Restzeit einfach zu gestalten, kann die Kommissioniervorrichtung wenigstens eine Speichereinrichtung umfassen, in der wenigstens eine vorbekannte, zu wenigstens einem Transportabschnitt gehörende, Transportzeit abgelegt ist. Alternativ dazu kann die Speichereinrichtung auch außerhalb der Kommissioniervorrichtung angeordnet sein und datenübertragend mit der wenigstens einen Restzeitberechnungsvorrichtung verbunden sein. Als ein Transportabschnitt ist dabei ein Abschnitt des Transportwegs von Lagergut bzw. von einem Lagergutträger zwischen einem Lagerort in der Kommissioniervorrichtung und der wenigstens einen Entnahmestelle zu verstehen. Die Transportzeiten können dabei insbesondere empirisch ermittelt sein und in einer Datenbank oder einer Look-up-Tabelle abgelegt sein. Zur Berechnung der Restzeit können die in der Speichereinrichtung abgelegten Transportzeiten für die vom Lagergut zu passierenden Transportabschnitte summiert werden.

Die zu erwartende Restzeit kann alternativ oder zusätzlich anhand eines in einer Speichereinrichtung abgelegten Weg/Zeit-Verlaufs bzw. einer Transportkurve berechnet werden. Dazu können empirisch bestimmte und/oder interpolierte Daten ermittelt werden.

Die Kommissioniervorrichtung kann wenigstens eine Positionsbestimmungseinrichtung zur Bestimmung der Position eines Lagerguts und/oder Lagergutträgers innerhalb der Kommissioniervorrichtung aufweisen, die mit der wenigstens einen Restzeitberechnungsvorrichtung datenübertragend verbunden ist. Durch die Bestimmung der Position kann die Genauigkeit der Berechnung der Restzeit verbessert werden. Insbesondere kann die durch die wenigstens eine Positionsbestimmungseinrichtung bestimmte Position von Lagergut als Grundlage für die oben beschriebene Berechnung der Restzeit anhand von abgelegten Transportzeiten oder anhand eines Weg/Zeit-Verlaufs genutzt werden.

Um die Restzeitberechnung weiter zu verbessern, kann die Kommissioniervorrichtung auch über wenigstens eine Einrichtung zur Geschwindigkeitserfassung von Lagergut bzw. von Lagergutträgern während des Transports verfügen.

Eine einfache Einrichtung zu Geschwindigkeitserfassung kann beispielsweise durch zwei entlang des Transportwegs voneinander beabstandete Positionsbestimmungseinrichtungen in Verbindung mit wenigstens einer Zeitmesseinrichtung erhalten werden. Damit kann beispielsweise die Zeit bestimmt werden, die beim Transport von Lagergut von der ersten Positionsbestimmungseinrichtung zu der zweiten Positionsbestimmungseinrichtung vergeht. Aus der daraus ermittelten Geschwindigkeit kann die Restzeit bis zur Ankunft des Lagerguts an der Entnahmestelle berechnet werden.

Bei der Restzeitberechnung können auch weitere Zeiten berücksichtigt werden. Insbesondere Wartezeiten für Lagergut. Dies kann insbesondere dann der Fall sein, wenn in der Kommissioniervorrichtung mehrere Entnahmestellen vorhanden sind. Dabei kann ein erstes Lagergut in einem ersten Transportvorgang an eine erste Entnahmestelle befördert werden, und anschließend ein zweites Lagergut an eine zweite Entnahmestelle transportiert werden. Zur Berechnung der Restzeit an der zweiten Entnahmestelle ist es dann vorteilhaft, zusätzlich zur Transportzeit auch die Wartezeit bis zur Beendigung des ersten Transportvorgangs zu berücksichtigen. Diese Wartezeiten können ebenfalls in einer Speichereinrichtung abgelegt sein, vorzugsweise in der wenigstens einen Speichereinrichtung, in der auch die Transportzeiten abgelegt sind, sofern so eine Speichereinrichtung vorhanden ist.

Die erfindungsgemäße Kommissioniervorrichtung kann dadurch verbessert werden, dass sie mit wenigstens einer weiteren Entnahmestelle versehen ist. Die wenigstens eine Anzeigeeinrichtung kann dann anzeigen, an welcher der Entnahmestellen als nächstes Lagergut zur Entnahme eintreffen wird. Alternativ dazu kann auch jede der Entnahmestellen mit wenigstens einer eigenen Anzeigeeinrichtung versehen sein. Dann kann für jede Entnahmestelle unabhängig voneinander angezeigt werden, wie viel Zeit bis zum Eintreffen des nächsten Lagerguts vergehen wird. Die Bedienperson kann dadurch entscheiden, in welcher Reihenfolge sie die Entnahmestellen zur Entnahme von Lagergut aufsucht.

Sind mehrere Entnahmestellen vorhanden, kann für jede der Entnahmestellen eine eigene Restzeitberechnungsvorrichtung vorgesehen sein. Alternativ dazu kann auch eine Restzeitberechnungsvorrichtung zur Berechnung der Restzeiten für mehrere Entnahmestellen verwendet werden.

Die wenigstens eine Anzeigeeinrichtung kann wenigstens zwei Felder aufweisen, die jeweils unterschiedlichen Entnahmestellen zugeordnet sind und in Abhängigkeit davon aktiviert werden, bei welcher der Entnahmestellen die Restzeit am kürzesten ist. Dadurch kann durch einen Blick auf eine Anzeigeeinrichtung erkannt werden, welche an welcher Entnahmestelle als nächstes Lagergut zur Abholung bereitstehen wird.

Die erfindungsgemäß vorgesehene Anzeigeeinrichtung kann auch zur Anzeige weiterer für die Bedienperson hilfreicher Informationen genutzt werden. Beispielsweise kann die Anzeigeeinrichtung zur Anzeige eines Zieles für zu entnehmendes Lagergut benutzt werden. Lediglich beispielhaft sei hier die Möglichkeit genannt, dass die Anzeigeeinrichtung anzeigt, in welchen Behälter Lagergut nach der Entnahme gelegt werden soll. Beispielsweise können Behälter durch Farbgebung oder farbliche Markierungen gekennzeichnet sein und diese Farbe an der Anzeigeeinrichtung dargestellt werden. So kann das Ziel des Lagerguts intuitiv von einer Bedienperson erkannt werden. Dadurch kann die Effizienz beim Betrieb der Kommissioniervorrichtung weiter erhöht werden.

Im Folgenden ist die Erfindung beispielhaft anhand einer vorteilhaften Ausführungsform mit Bezug auf die Zeichnung näher erläutert. Die bei der Ausführungsform beispielhaft dargestellte Merkmalskombination kann nach Maßgabe der obigen Ausführungen entsprechend für einen bestimmten Anwendungsfall durch weitere Merkmale ergänzt werden. Auch können, ebenfalls nach Maßgabe der obigen Ausführungen, einzelne Merkmale bei der beschriebenen Ausführungsform weggelassen werden, wenn es auf die Wirkung dieses Merkmals in einem konkreten Anwendungsfall nicht ankommt.

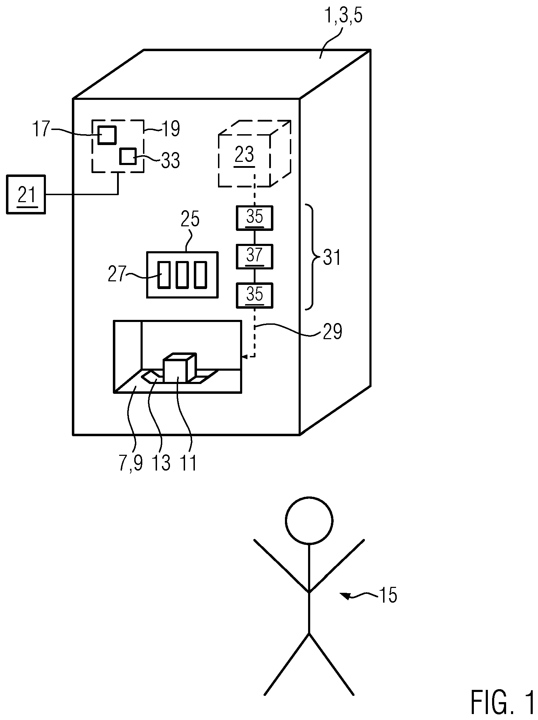

Fig. 1 zeigt eine schematische, nicht maßstabsgetreue, perspektivische Darstellung einer vorteilhaften Ausführungsform einer erfindungsgemäßen Kommissioniervorrichtung 1.

Die Kommissioniervorrichtung 1 ist bevorzugt ein Lagerlift 3, insbesondere ein Paternosterlift 5.

Die Kommissioniervorrichtung 1 ist mit einer Entnahmestelle 7 versehen, welche in einer Bedienöffnung 9 der Kommissioniervorrichtung 1 angeordnet sein kann. Die Entnahmestelle 7 kann jedoch auch beispielsweise an einem Drehtisch, am Ende eines Förderbandes oder an einer kipp- oder schwenkbaren Entnahmevorrichtung angeordnet sein.

An der Entnahmestelle 7 können Lagergut 11 und/oder Lagergutträger 13 aus der Kommissioniervorrichtung 1 entnommen werden. Lediglich beispielhaft ist in Fig. 1 Lagergut 11 auf einem Lagergutträger 13 dargestellt. Bevorzugt ist die Entnahmestelle 7 so angeordnet, dass diese von einer Bedienperson 15 erreicht werden kann.

Die Bedienperson 15 kann das Lagergut 11 mit oder ohne Lagergutträger 13 an der Entnahmestelle 7 aus der Kommissioniervorrichtung 1 entnehmen und beispielsweise einem Sammelbehälter (nicht dargestellt) zuführen.

Die Kommissioniervorrichtung 1 ist mit einer Restzeitberechnungsvorrichtung 17 verbunden. Lediglich beispielhaft ist die Restzeitberechnungsvorrichtung 17 als in der Kommissioniervorrichtung 1 integriert dargestellt. Bevorzugt ist die Restzeitberechnungsvorrichtung 17 Teil einer Steuereinrichtung 19 der Kommissioniervorrichtung 1. Dann ist die Restzeitberechnungsvorrichtung 17 Teil der Kommissioniervorrichtung 1.

Die Restzeitberechnungsvorrichtung 17 kann auch Teil einer außerhalb der Kommissioniervorrichtung 1 angeordneten externen Steuereinrichtung 21 sein, die datenübertragend mit der Kommissioniervorrichtung 1, insbesondere mit der Steuereinrichtung 19, verbunden ist. Die externe Steuereinrichtung 21 kann beispielsweise ein Computer, insbesondere ein PC sein.

Die Restzeitberechnungsvorrichtung 17 dient zur Berechnung der Restzeit bis zum Eintreffen eines in der Kommissioniervorrichtung 1 transportierten Lagerguts 11 oder eines Lagergutträgers 13 an der wenigstens einen Entnahmestelle 7. Die Restzeit kann beispielsweise ab dem Zeitpunkt berechnet werden, zu dem Lagergut 11 bzw. ein Lagergutträger 13 von einem Lagerort 23 innerhalb der Kommissioniervorrichtung 1 zu der Entnahmestelle 7 transportiert wird.

Alternativ dazu können auch andere Zeitpunkte zur Berechnung der Restzeit genutzt werden. Beispielsweise kann die Restzeit ab dem Zeitpunkt berechnet werden, zu dem eine Anforderung an die Steuereinrichtung 19 zur Abholung von Lagergut 11 übermittelt wird.

Die Kommissioniervorrichtung 1 weist eine Anzeigeeinrichtung 25 auf, auf der eine die Restzeit repräsentierende Abbildung 27 anzeigbar ist. Lediglich beispielhaft ist die Abbildung 27 als Balkenanzeige in Fig. 1 dargestellt. Die Abbildung 27 ist bevorzugt so gewählt, dass die Restzeit intuitiv erkennbar ist.

Die Anzeigeeinrichtung 25 ist bevorzugt so angeordnet, dass sie von einer Bedienperson 15 von außerhalb der Kommissioniervorrichtung 1 eingesehen werden kann.

Die erfindungsgemäße Kommissioniervorrichtung 1 kann mit wenigstens einer weiteren Entnahmestelle 7 (nicht dargestellt) versehen sein. Die wenigstens eine Anzeigeeinrichtung 25 kann dann anzeigen, an welcher der Entnahmestellen 7 als nächstes Lagergut 11 zur Entnahme eintreffen wird. Alternativ dazu kann auch jede der Entnahmestellen 7 mit wenigstens einer eigenen Anzeigeeinrichtung 25 versehen sein. Dann kann für jede Entnahmestelle 7 unabhängig voneinander angezeigt werden, wie viel Zeit bis zum Eintreffen des nächsten Lagerguts 11 vergehen wird. Die Bedienperson 15 kann dadurch entscheiden, in welcher Reihenfolge sie die Entnahmestellen 7 zur Entnahme von Lagergut 11 aufsucht.

In Fig. 1 ist lediglich zur Veranschaulichung ein Transportweg 29 von dem Lagerort 23 zu der Entnahmestelle 7 durch eine gestrichelte Linie angedeutet. Der Transportweg 29 kann in Transportabschnitte unterteilt sein. Lediglich beispielhaft ist ein Transportabschnitt 31 dargestellt.

Die Kommissioniervorrichtung 1 kann wenigstens eine Speichereinrichtung 33 aufweisen, in der wenigstens eine vorbekannte, zu wenigstens einem Transportabschnitt 31 gehörende, Transportzeit abgelegt ist. Die Transportzeit gibt also an, wie lange Lagergut zum Passieren des Abschnitts 31 beim Transport benötigt. Die Transportzeiten können beispielsweise empirisch ermittelt sein.

Es ist vorteilhaft, wenn die Kommissioniervorrichtung 1 wenigstens eine, vorzugsweise mehrere, Positionsbestimmungseinrichtungen 35 aufweist. Durch die Positionsbestimmungseinrichtungen 35 kann die Position von Lagergut 11 bzw. von einem Lagergutträger 13 entlang des Transportwegs 29 bestimmt werden.

Die Positionsbestimmungseinrichtungen 35 sind bevorzugt datenübertragend mit der wenigstens einen Restzeitberechnungsvorrichtung 17 verbunden. Die Restzeit für den Transport des Lagerguts 11 zu der Entnahmestelle 7 lässt sich anhand wenigstens einer ermittelten Position entlang des Transportwegs 29 leicht ermitteln. Ist beispielsweise die Geschwindigkeit des Transports innerhalb der Kommissioniervorrichtung 1 bekannt, so kann die verbleibende Dauer, also die Restzeit, von dem Zeitpunkt des Passierens einer Positionsbestimmungseinrichtung 35 ausgehend berechnet werden.

Alternativ oder zusätzlich dazu kann auch die Geschwindigkeit von Lagergut auf dem Transportweg 29 bestimmt werden. Dazu können beispielsweise wenigstens zwei Positionsbestimmungseinrichtungen 35 verwendet werden, wobei zusätzlich zur Positionsbestimmung auch noch die Dauer ermittelt wird, die das Lagergut 11 von der einen Positionsbestimmungseinrichtung 35 zu der anderen Positionsbestimmungseinrichtung 35 benötigt.

Alternativ oder zusätzlich dazu kann die Kommissioniervorrichtung 1 auch mit wenigstens einer Einrichtung 37 zur Geschwindigkeitserfassung von Lagergut 11 während des Transports versehen sein.

### Bezugszeichen

- 1: Kommissioniervorrichtung
- 3: Lagerlift
- 5: Paternoster
- 7: Entnahmestelle
- 9: Bedienöffnung
- 11: Lagergut
- 13: Lagergutträger
- 15: Bedienperson
- 17: Restzeitberechnungsvorrichtung
- 19: Steuereinrichtung
- 21: Externe Steuereinrichtung
- 23: Lagerort
- 25: Anzeigeeinrichtung
- 27: Abbildung
- 29: Transportweg
- 31: Transportabschnitt
- 33: Speichereinrichtung
- 35: Positionsbestimmungseinrichtung
- 37: Einrichtung zur Geschwindigkeitserfassung

## Patentansprüche

1. Lagersystem mit wenigstens einer Kommissioniervorrichtung (1), insbesondere Lagerlift (3), mit wenigstens einer Entnahmestelle (7) für Lagergut (11) und/oder Lagergutträger (13), wobei die Kommissioniervorrichtung (1) mit wenigstens einer Restzeitberechnungsvorrichtung (17) verbunden ist, mit der die Restzeit bis zum Eintreffen eines in der Kommissioniervorrichtung (1) transportierten Lagerguts (11) und/oder Lagergutträgers (13) an der wenigstens einen Entnahmestelle (7) berechenbar ist, und wobei die Kommissioniervorrichtung (1) wenigstens eine Positionsbestimmungseinrichtung (35) zur Bestimmung der Position eines Lagerguts (11) und/oder Lagergutträgers (13) innerhalb der Kommissioniervorrichtung (1) aufweist, die mit der wenigstens einen Restzeitberechnungsvorrichtung (17) datenübertragend verbunden ist, **dadurch gekennzeichnet, dass,** die Kommissioniervorrichtung (1) wenigstens eine Anzeigeeinrichtung (25) aufweist, wobei die Kommissioniervorrichtung (1) derart eingerichtet ist, dass auf der Anzeigeeinrichtung (25) eine die Restzeit repräsentierende Abbildung (27) anzeigbar ist.

2. Lagersystem nach Anspruch 1, **dadurch gekennzeichnet, dass** die wenigstens eine Anzeigeeinrichtung (25) wenigstens einen Bildschirm und/oder eine Leuchtdiodenmatrix aufweist.

3. Lagersystem Anspruch 1 oder 2, **dadurch gekennzeichnet, dass** die wenigstens eine Anzeigeeinrichtung (25) wenigstens ein Leuchtelement aufweist, dessen Lichtfarbe und/oder Helligkeit einstellbar ist.

4. Lagersystem nach einem der Ansprüche 1 bis 3, **dadurch gekennzeichnet, dass** die wenigstens eine Anzeigeeinrichtung (25) wenigstens ein bewegliches mechanisches Element aufweist.

5. Lagersystem nach einem der Ansprüche 1 bis 4, **dadurch gekennzeichnet, dass** die wenigstens eine Anzeigeeinrichtung (25) wenigstens eine Ziffernanzeige aufweist.

6. Lagersystem nach einem der Ansprüche 1 bis 5, **dadurch gekennzeichnet, dass** die wenigstens eine Restzeitberechnungsvorrichtung (17) in die Kommissioniervorrichtung (1) integriert ist.

7. Lagersystem nach einem der Ansprüche 1 bis 6, **dadurch gekennzeichnet, dass** die wenigstens eine Restzeitberechnungsvorrichtung (17) Teil einer außerhalb der Kommissioniervorrichtung (1) angeordneten Steuereinrichtung (21) ist.

8. Lagersystem nach einem der Ansprüche 1 bis 7, **gekennzeichnet durch** wenigstens eine Speichereinrichtung (23), in der wenigstens eine vorbekannte, zu wenigstens einem Transportabschnitt (31) gehörende, Transportzeit abgelegt ist.

9. Lagersystem nach einem der Ansprüche 1 bis 8, **gekennzeichnet durch** wenigstens eine weitere Entnahmestelle (7), die mit wenigstens einer Anzeigeeinrichtung (25) versehen ist.

10. Lagersystem nach einem der Ansprüche 1 bis 9, **dadurch gekennzeichnet, dass** mehrere Entnahmestellen (7) vorgesehen sind, wobei eine Anzeigeeinrichtung (25) mehreren Entnahmestellen (7) zugeordnet ist.

11. Lagersystem nach Anspruch 10, **dadurch gekennzeichnet, dass** die Anzeigeeinrichtung (25) wenigstens zwei Felder aufweist, die jeweils unterschiedlichen Entnahmestellen (7) zugeordnet sind und in Abhängigkeit davon aktiviert werden, bei welcher der Entnahmestellen (7) die Restzeit am kürzesten ist.

12. Verfahren zum Anzeigen einer Restzeit bis zum Eintreffen eines in wenigstens einer Kommissioniervorrichtung (1) eines Lagersystems transportierten Lagerguts (11) und/oder Lagergutträgers (13) an wenigstens einer Entnahmestelle (7) der wenigstens einen Kommissioniervorrichtung (1), wobei die Restzeit berechnet und durch wenigstens eine die Restzeit repräsentierende Abbildung (27) von außerhalb der Kommissioniervorrichtung (1) einsehbar angezeigt wird, wobei zur Berechnung der Restzeit die Position wenigstens eines transportierten Lagerguts (11) und/oder Lagergutträgers (13) zu wenigstens einem Zeitpunkt bestimmt wird.

13. Verfahren nach Anspruch 12, wobei zur Berechnung der Restzeit in einer Speichereinrichtung (33) abgelegte Transportzeiten der zwischen der bestimmten Position und der Entnahmestelle (7) liegenden Transportabschnitte (31) innerhalb der Kommissioniervorrichtung (1) summiert werden.

14. Verfahren nach Anspruch 12 oder 13, wobei die nach dem Erreichen der zuvor bestimmten Position zu erwartende Restzeit anhand eines in einer Speichereinrichtung (33) abgelegten Weg/Zeit-Verlaufs berechnet wird.
